# EUROPÄISCHE PATENTSCHRIFT

(11) **EP 3 519 684 B1**
(45) Veröffentlichungstag und Bekanntmachung des Hinweises auf die Patenterteilung: **11.11.2020**
(21) Anmeldenummer: 17784575.7
(22) Anmeldetag: 28.09.2017
(51) Int. Cl.: F02B 21/00, F02M 23/00, F02M 23/04, F02D 13/02

(54) **HUBKOLBEN-VERBRENNUNGSKRAFTMASCHINE MIT VORRICHTUNG ZUM STEIGERN IHRES DREHMOMENTES**
RECIPROCATING-PISTON INTERNAL COMBUSTION ENGINE WITH DEVICE FOR INCREASING THE TORQUE THEREOF
MOTEUR À COMBUSTION INTERNE À PISTONS ALTERNATIFS MUNI D'UN DISPOSITIF PERMETTANT D'AUGMENTER LE COUPLE DU MOTEUR

(30) Priorität: 30.09.2016 DE 102016219101
(43) Veröffentlichungstag der Anmeldung: 07.08.2019
(73) Patentinhaber: Erwin Junker Grinding Technology a.s., 27601 Mélník (CZ)
(72) Erfinder: JUNKER, Erwin, 77815 Bühl/Baden (DE)
(74) Vertreter: Leske, Thomas
(86) Internationale Anmeldenummer: PCT/EP2017/074700
(87) Internationale Veröffentlichungsnummer: WO 2018/060371

(56) Entgegenhaltungen:
- EP-A1- 1 747 351
- JP-A- H1 089 033
- JP-A- S58 140 418
- JP-A- 2000 186 517
- US-A1- 2007 113 803
- US-B1- 6 302 076

## Beschreibung

Die Erfindung betrifft eine Hubkolben-Verbrennungskraftmaschine mit den Merkmalen gemäß Oberbegriff von Anspruch 1.

Hubkolben-Verbrennungskraftmaschinen, bei welchen Verbrennungsluft über ein im Zylinderkopf eines Zylinders angeordnetes Einlassventil in den Zylinder einführbar ist, was der prinzipiellen Bauweise von Hubkolben-Verbrennungskraftmaschinen entspricht, und welche zusätzlich eine Vorrichtung zum Steigern des Drehmomentes der Verbrennungskraftmaschine in Form eines zusätzliches Druckluftspeichers, aus welchem zusätzliche Verbrennungsluft über das in der im Zylinderkopf angeordneten Einlassleitung vorhandene Einlassventil dem Zylinder ebenfalls zuführbar ist, sind prinzipiell bekannt. Die aus dem zusätzlichen Druckbehälter dem Zylinder zugeführte zusätzliche Verbrennungsluft wird gemäß den bekannten Vorrichtungen entweder direkt in den Zylinder über dem Zylinderkopf und ein darin angeordnetes zusätzliches Lufteinlassventil oder über die Einlassleitung vor dem Einlassventil im Zylinderkopf dem Zylinder zugeführt.

Gemäß DE 11 2007 000 944 T5 erfolgt eine Einblasung von zusätzlicher Verbrennungsluft während des Verdichtungshubs, und zwar insbesondere während des Beginns des Kompressionshubes. Die zusätzliche Verbrennungsluft wird in einem Druckluftbehälter unter einem Druck von ca. 200 bar vorgehalten. Damit ist es möglich, positiven Einfluss auf die Emission und bei Mehrzylindermaschinen auch auf das gesamte Betriebsverhalten der Verbrennungskraftmaschine zu nehmen. Allerdings ist für derartig hohe Drücke im Druckbehälter ein erheblicher Anteil zusätzlicher Energie erforderlich, um eine genügend große Luftmenge unter einem derartig relativ hohen Druck vorzuhalten.

Aus DE 10 2010 033 591 ist eine Verbrennungskraftmaschine mit verbessertem Kaltstartverhalten beschrieben, bei welcher nach dem Ansaugen bzw. Einlassen eines Brennstoff-LuftGemisches in den Zylinder vor dem eigentlichen Zündvorgang dieses Gemisch komprimiert und dann zusätzlich komprimierte Druckluft aus einem Luftspeicher in den Zylinder eingeleitet wird. Dadurch kann das Kaltstartverhalten eines derartigen Verbrennungsmotors verbessert werden, wobei die Einleitung zusätzlicher Druckluft nur zum Zwecke des Kaltstarts vorgesehen ist.

Um Emission und Leistung einer Verbrennungskraftmaschine positiv beeinflussen zu können, ist in RU 2 435 065 C2 eine Vorrichtung beschrieben, bei welcher ein zusätzlicher Lufteinlass im Zylinder einer Verbrennungskraftmaschine vorgesehen ist, über welchen aus einem Druckspeicher Druckluft nach dem Ende der Zündung in den Zylinder eingedrückt wird, um durch zusätzlichen Sauerstoff das Verbrennungsverhalten und damit die Leistung des Motors zu verbessern.

In DE 10 2004 047 975 A1 ist beschrieben, dass Zusatzluft in Form von Druckluft aus einem Druckspeicher getaktet während der Ansaugphase dem Zylinder zugeführt wird, wobei als Druckbehälter der Druckluftbehälter einer Druckluftbremsanlage verwendet wird. Über das getaktete Einblasen von Zusatzluft, welches hinsichtlich Menge und Einblasdauer auf die Betriebsparameter der Verbrennungskraftmaschine eingestellt werden, kann das gesamte Leistungsverhalten einer Verbrennungskraftmaschine verbessert werden. Die Zusatzluft wird dabei der Ansaugleitung während der Ansaugphase zugeführt, weshalb eine relativ große Luftmenge aus dem Druckbehälter für jeden jeweiligen Einblastakt zur Verfügung gestellt werden muss.

Des Weiteren ist aus DE 10 2012 014 204 B4 sowie aus DE 10 2012 014 205 B3 eine Verbrennungskraftmaschine beschrieben, bei welcher einem Zylinder zusätzliche Verbrennungsluft aus einem zusätzlich vorgesehenen Druckbehälter einem in zwei Teilstränge aufgeteilten Ansaugkanal über ein steuerbares Sperrglied zur Variation des Strömungsquerschnittes eines der beiden Teilkanäle zugeführt wird. Der Druckbehälter ist dabei stromabwärts von dem steuerbaren Sperrglied an den entsprechenden Teilkanal angeschlossen, so dass lediglich das Volumen in dem Teilkanal, nicht aber das Volumen beider Ansaug-Teilkanäle, mit der druckbeaufschlagten zusätzlichen Verbrennungsluft beaufschlagt werden muss. Die Aufteilung des Ansaugkanals in Teilkanäle ist jedoch relativ kompliziert und erhöht die Kosten für eine derartige bekannte Verbrennungskraftmaschine.

Weiterhin ist aus DE 10 2008 000 326 A1 eine aufgeladene Verbrennungskraftmaschine beschrieben, bei welcher eine zusätzliche Einrichtung zum Einblasen von zusätzlicher Druckluft zwischen einem vorgesehenen Turbolader, d.h. Verdichter des Turboladers, und dem Einlassventil der Verbrennungskraftmaschine in den Luftansaugtrakt vorgesehen ist. Die zusätzliche Druckluft wird nicht permanent in den Ansaugtrakt eingeführt, sondern nur, wenn dies in Abhängigkeit von der aktuellen Betriebssituation des Fahrzeugs unter Berücksichtigung der Sicherheit des Fahrers, dem Kraftstoffverbrauch und dem Fahrkomfort sowie dem Kupplungsverschleiß zu einem vorteilhaften Betriebsverhalten des Fahrzeugs führt. Auch bei diesem bekannten Verfahren muss eine relativ große Menge an zusätzlicher Druckluft in den Ansaugtrakt eingeblasen werden, da es sich dabei um ein relativ großes Volumen handelt, was zu einem schnellen Verbrauch der in einem zusätzlichen Druckluftspeicher gespeicherten Verbrennungsluft führt.

In DE 102 24 719 B4 ist eine Verbrennungskraftmaschine beschrieben, bei welcher ebenfalls ein Druckspeicher vorgesehen ist, aus welchem über ein Motorsteuergerät Ventile gesteuert werden, um getaktet den Saugtrakt des Verbrennungsmotors mit zusätzlicher Verbrennungsluft zu beaufschlagen. Dabei wird das Beaufschlagen des gesamten Einlasstraktes mit zusätzlicher druckbeaufschlagter Verbrennungsluft wegen der Größe des Volumens des Ansaugtraktes als nachteilig angesehen, weil dazu ein recht voluminöses Druckgefäß erforderlich wäre. Zur Vermeidung dieses Problems wird jedoch auf eine zusätzliche, kleiner dimensionierte Ansaugleitung abgestellt, über welche die zusätzliche Verbrennungsluft dem eigentlichen Ansaugtrakt kurz vor dem Einlass in den Zylinder zugeführt wird. Der Druckspeicher ist nun an diese zusätzliche Ansaugtraktleitung angeschlossen. Dadurch verkompliziert sich das gesamte, für den Verbrennungsmotor erforderliche Leitungssystem, was dem Erfordernis einer hohen Kompaktheit eines derartigen Verbrennungsmotors beispielsweise in einem PKW entgegensteht und was die Komplexität des Aufbaus und damit die Kosten eines derartigen Verbrennungsmotors zusätzlich erhöht.

Außerdem ist aus DE 39 06 312 C1 eine Beschleunigungshilfe für eine abgasturboaufgeladene Verbrennungskraftmaschine bekannt. Die Beschleunigungshilfe besteht darin, dass ein zusätzlicher Druckluftbehälter vorgesehen ist, aus welchem druckbeaufschlagte Verbrennungsluft in die jeweiligen Zylinder eingeblasen wird. Der Druck in diesem Druckluftbehälter liegt im Bereich von 5 bar, wobei die Lufteinblasung getaktet wird dergestalt, dass beispielsweise beim Treten des Gaspedals nicht sofort zusätzlicher Kraftstoff in den Zylinder eingebracht wird, sondern zunächst die Einblasung von Zusatzluft erfolgt und erst danach die Kraftstoffmenge erhöht wird. Dazu ist ein selbsttätiges Ventil vorgesehen zur Versorgung des Saugrohres der Verbrennungskraftmaschine mit zusätzlicher Hilfsladeluft. Das zusätzliche vorhandene selbsttätige Ventil ist dabei am Eintritt in die Einlassluftsammelleitung, nicht aber in der Nähe des jeweiligen Zylinders angeordnet, so dass zur Druckerhöhung in der Einlasssammelleitung ein relativ großes Luftvolumen erforderlich ist.

Auch in DE 10 2008 000 324 A1 ist eine Verbrennungskraftmaschine mit einer Einrichtung zum Einblasen von zusätzlicher Druckluft in einen Luftansaugtrakt zwischen einem Turbolader, d.h. dem Verdichter des Turboladers, und dem unmittelbaren Einlass im Bereich des Einlassventils im Zylinderkopf des Verbrennungsmotors beschrieben. Die in den Luftansaugtrakt zusätzlich eingeblasene Druckluft wird hinsichtlich Zeitpunkt, Dauer, Druck und/oder Volumen in Abhängigkeit von der erforderlichen Leistung der Verbrennungskraftmaschine, ihrem Lastzustand, der Fahrzeuggeschwindigkeit und den Abläufen zur Übersetzungsänderung des Getriebes gesteuert. Die Druckluft wird in die Ansaugleitung eingeblasen, so dass eine relativ große Luftmenge erforderlich ist. Allenfalls wird die Dauer der Lufteinblasung in Abhängigkeit von der Drosselklappenstellung geregelt.

Und schließlich ist aus US 3 673 796 eine Verbrennungskraftmaschine mit einem Lufteinlasssystem eines turboaufgeladenen Motors bekannt, bei welchem zwischen dem Verdichter des Abgasturboladers und dem Einlass in den Zylinder eine Luftklappe vorgesehen ist, mittels welcher sozusagen eine gewisse Abdichtung der Ansaugleitung in Richtung auf den Verdichter des Abgasturboladers realisiert werden soll. Da sich diese Klappe in der Nähe des Verdichters befindet, ist das zwischen der Klappe und dem Einlassventil vorhandene Volumen des Ansaugtraktes immer noch recht groß, so dass eine derartige Vorrichtung ein voluminöses Druckgefäß für die zusätzlich zur Verfügung zu stellende Verbrennungsluft erfordert.

Gegenüber den bekannten Vorrichtungen besteht die Aufgabe der Erfindung darin, eine Hubkolben-Verbrennungskraftmaschine mit gesteigertem Drehmoment zu schaffen, welche eine einfache Konstruktion aufweist, eine zuverlässige Versorgung der Zylinder mit zusätzlicher Verbrennungsluft gewährleistet, wobei die Verbrennungskraftmaschine dennoch einen hohen Grad an Kompaktheit aufweisen und hinsichtlich ihrer Abmessungen allenfalls unwesentlich mehr Platz einnehmen soll.

Diese Aufgabe wird mit einer Verbrennungskraftmaschine in Hubkolbenbauart mit den Merkmalen gemäß Anspruch 1 gelöst. Zweckmäßige Weiterbildungen sind in den abhängigen Ansprüchen definiert.

Erfindungsgemäß weist die Verbrennungskraftmaschine in Hubkolbenbauart zumindest ein in einem Zylinderkopf eines Zylinders angeordnetes Einlassventil auf, an welches eine Einlassleitung angeschlossen ist. Über die Einlassleitung wird Verbrennungsluft dem Zylinder zugeführt. Bei einer Saugmaschine wird die Verbrennungsluft über die Einlassleitung angesaugt, während bei einer aufgeladenen Maschine die Verbrennungsluft über ein Ladeorgan, meist in Form eines durch eine Abgasturbine angetriebenen Verdichters, dem Zylinder zugeführt wird. Zusätzlich ist ein Druckluftspeicher vorgesehen, welcher über ein steuerbares Ventil an zumindest einen Teil der Einlassleitung angeschlossen ist. Damit Druckluft, welche aus einem Druckluftspeicher der Einlassleitung und damit über die Einlassleitung dem Zylinder zugeführt wird, nicht das gesamte größere Volumen der Einlassleitung auffüllen muss, ist ein Absperrelement in der Einlassleitung vorgesehen, mittels welchem der Durchströmquerschnitt der Einlassleitung abgesperrt werden kann. Dadurch wird das Volumen der Einlassleitung, in welches Druckluft aus dem Druckluftspeicher zugeführt wird, gegenüber der gesamten Einlassleitung erheblich verringert. Mit der Druckluft aus dem Druckluftspeicher wird zumindest in einem Teil der Einlassleitung der dort herrschende Druck über den angehoben, welcher ansonsten z.B. durch einen als Aufladeorgan fungierenden Verdichter eines Abgasturboladers vorhanden ist. Dieser mit der zusätzlich zugeführten Druckluft erhöhte Druck in der Einlassleitung führt zu einer erhöhten Dichte der Ladeluft und damit zu einem erhöhten Sauerstoffangebot im Brennraum des Zylinders.

Das Ventil, über welches Druckluft aus dem Druckluftspeicher zugeführt wird, ist derart steuerbar, dass von einer Steuereinrichtung auf Basis eines Steuersignals Druckluft aus dem Druckluftspeicher in den Bereich der Einlassleitung zugeführt wird, in welchem das Einlassventil angeordnet ist. Das bedeutet, dass die Druckluft möglichst nahe am Zylinder aus dem Druckluftspeicher zugeführt wird. Das Absperrelement ist nun so angeordnet, dass der Bereich der Einlassleitung, in welchen die Druckluft aus dem Druckluftspeicher zugeführt wird, bei geschlossenem Absperrelement, d.h. bei abgesperrtem Durchströmquerschnitt der Einlassleitung, im Wesentlichen nur auf einen Teil der Einlassleitung im Zylinderkopf beschränkt ist. Das Absperrelement befindet sich also in möglichst geringem Abstand zum Einlassventil. Vorzugsweise ist das Absperrelement an der Stelle der Einlassleitung angeordnet, an welcher die Einlassleitung selbst an den Zylinderkopf angeschlossen ist. In üblicher Weise wird das Einlassventil mittels eines Ansteuerelementes, vorzugsweise eines auf einer Nockenwelle angeordneten Nockens, hinsichtlich seiner Bewegung gesteuert. Erfindungsgemäß ist die Nockenform derartig angepasst, dass das Einlassventil während des Kompressionshubes kurzzeitig erneut in eine Offenstellung bringbar ist, während welcher zusätzlich als Verbrennungsluft verwendete Druckluft aus dem Druckluftspeicher über das gesteuerte Ventil in den Zylinder einleitbar und das Absperrelement in seiner den Durchströmquerschnitt der Einlassleitung sperrenden, geschlossenen Position befindlich ist.

Mit dem zusätzlichen Absperrelement wird erreicht, dass die zusätzliche Druckluft aus dem Druckluftspeicher nur in ein relativ kleines Volumen der Einlassleitung eingeleitet wird, so dass die im Druckluftspeicher vorgehaltene Druckluft für eine möglichst große Anzahl von Verbrennungsvorgängen im Zylinder bereitgestellt werden kann. Der kleinere bzw. verringerte Raum bietet der Druckluft als kompressiblem Medium auch ihre zeitlich schnellere Einbringung in den Zylinder und beeinflusst aus diesem Grunde die Befüllung des Zylinders vorteilhaft. Das Absperrelement und das Ventil werden dabei entsprechend aufeinander abgestimmt von der Steuereinrichtung gesteuert. Das Absperrelement kann dabei vorzugsweise aktiv gesteuert werden; es kann jedoch auch mittels der kinetischen Energie der strömenden Verbrennungsluft zumindest teilgesteuert werden.

Vorzugsweise ist das Absperrelement als ein druckluftgesteuertes, zwischen zwei Positionen bewegbares Klappenventil ausgebildet. Ein derartiges Klappenventil ist bei geöffnetem steuerbaren Ventil durch die kinetische Energie der Verbrennungsluft bzw. Druckluft aus dem Druckspeicher mit einem höheren, gegenüber dem in der Einlassleitung ansonsten vorhandenen Druck in eine die Einlassleitung sperrende Position bewegbar. Wenn das Absperrelement in diese den Durchströmquerschnitt der Einlassleitung sperrende Position bewegt ist, wird aufgrund der bei geöffnetem Ventil zugeführten Druckluft das Absperrelement in der geschlossenen Position so lange gehalten, bis die Zufuhr von zusätzlicher Druckluft in den abgesperrten Teil der Einlassleitung unterbrochen wird, wodurch bei Beginn des nachfolgenden Einlass- bzw. Ansaugtaktes die kinetische Energie der Verbrennungsluft das Klappenventil wieder in eine die Einlassleitung freigebende geöffnete Position bewegt. Sofern die kinetische Energie der Verbrennungsluft nicht ausreichen sollte, kann vorgesehen sein, das Absperrelement zusätzlich mit einer aktiven Betätigungseinrichtung zwischen seiner geöffneten und seiner absperrenden Position zu bewegen, insbesondere zu schwenken.

Vorzugsweise ist ein solcher Aktuator elektrisch, magnetisch oder als Kombination zumindest zweier dieser Antriebsarten ausgebildet.

Vorzugsweise ist das Einlassventil auf Basis seines vorzugsweise nockengesteuerten Antriebs in Abhängigkeit von der Bewegung des Klappenventils gesteuert, und zwar derart, dass es erst öffnet, nachdem das Klappenventil in seine geschlossene Position bewegt worden ist, und schließt, bevor das Klappenventil wieder in seine geöffnete Position bewegt worden ist.

Der das Einlassventil vorzugsweise steuernde Nocken auf der Nockenwelle weist eine zusätzliche Öffnungsrampe auf, mittels welcher das Einlassventil während des Kompressionshubes erneut geöffnet wird. Das Öffnen des Einlassventils ist dabei selbstverständlich so gesteuert, dass es nur während einer solchen Phase des Kompressionshubes öffnet, während welcher der Druck im Zylinder geringer ist als der Druck der Druckluft im Druckluftspeicher.

Es ist aber auch möglich, dass für das Steuern des Einlassventils zum erneuten Öffnen ein zusätzlicher Nocken auf der Nockenwelle vorgesehen ist. Vorzugsweise kann dieser Nocken auch als Schrägnocken ausgebildet sein, so dass in Abhängigkeit von der jeweiligen Last des Motors die Öffnungs- und Schließzeitpunkte des Einlassventils für das erneute Öffnen während des Kompressionshubes veränderbar sind.

Vorzugsweise weist die zusätzliche Druckluft im Druckluftspeicher einen Druck im Bereich von 10 bis 15 bar auf, kann jedoch auch höhere Werte aufweisen, insbesondere in einem Bereich von 10 bis 30 bar.

Das zwischen dem als Klappenventil ausgebildete Absperrelement und dem Einlassventil angeordnete Ventil zur Steuerung der Druckluft in den Bereich der Einlassleitung unmittelbar vor dem Einlassventil ist vorzugsweise derart steuerbar, dass die Druckluft in Abhängigkeit von Motorbetriebsparametern wie beispielsweise Motorlast in die Einlassleitung zuführbar ist.

Gemäß einem zweiten Aspekt der Erfindung wird eine Verbrennungskraftmaschine in Hubkolbenbauart ebenfalls mit zumindest einem in einem Zylinderkopf eines Zylinders angeordneten Einlassventil bereitgestellt, an welches ein Einlassreservoir angeschlossen ist. Über das Einlassreservoir wird Verbrennungsluft dem Zylinder zugeführt, und zwar von einem Druckluftspeicher, welcher unmittelbar an das Einlassreservoir über ein steuerbares Ventil angeschlossen ist. Das Einlassreservoir ist dabei in einem Volumen ausgeführt, welches kleiner ist als das üblicherweise vorhandene Volumen einer kompletten Einlassleitung, welches bei herkömmlichen Verbrennungskraftmaschinen allerdings groß genug ist, damit ausreichend Verbrennungsluft, und zwar je nach Lastzustand des Verbrennungsmotors, dem jeweiligen Zylinder zugeführt werden kann. Erfindungsgemäß ist das Ventil derart steuerbar, dass auf Basis eines Steuersignals Verbrennungsluft aus dem Druckluftspeicher in einen Bereich des Einlassreservoirs im Zylinderkopf zuführbar ist, in welchem das Einlassventil angeordnet ist. D.h. das Ventil ist in unmittelbarer Nähe des Einlassventils im Zylinderkopf angeordnet, ist jedoch nicht im Zylinderkopf selbst angeordnet. Mit diesem Aufbau ist es möglich, herkömmliche Konstruktionen von Zylinderköpfen zu verwenden und vorhandene Motoren gegebenenfalls auf eine derartige Bauweise mit Speisung der Verbrennungsluft aus einem Druckluftspeicher umzurüsten, ohne eine komplett neue Motorkonstruktion vornehmen zu müssen. Das Einlassventil wird mittels eines Ansteuerelements, vorzugsweise eines Nockens vorzugsweise einer Nockenwelle, hinsichtlich seiner erforderlichen Bewegung gesteuert, wobei das Ansteuerelement so ausgebildet ist, dass das Einlassventil während des Kompressionshubes der Verbrennungskraftmaschine das Einlassventil erneut in eine Offenstellung bringbar ist, während welcher nochmals Verbrennungsluft aus dem Druckspeicher über das gesteuerte Ventil in den Zylinder einleitbar ist, und vor Ende des Kompessionshubes wieder geschlossen wird, so dass der im Zylinder herrschende Druck noch nicht den im Druckluftspeicher herrschenden Druck übersteigt.

Die Verbrennungskraftmaschine ist am Beispiel einer Ventilsteuerung über Nockenwelle beschrieben. Die Ventilsteuerung ist jedoch nicht auf Nockenwellen beschränkt. Vielmehr sind auch andere Ventilsteuerungen wie beispielsweise elektrische, elektromagnetische oder hydraulische Ventilsteuerungen denkbar.

Weitere Vorteile, Details und Ausgestaltungen der erfindungsgemäßen Verbrennungskraftmaschine werden nachfolgend unter Bezugnahme auf die Zeichnung detailliert erläutert. In der Zeichnung zeigen:
- Figur 1:: einen prinzipiellen Querschnitt durch den Zylinder einer Verbrennungskraftmaschine mit einem steuerbaren Ventil in der Einlassleitung zur Zufuhr von zusätzlicher Druckluft aus einem Druckluftspeicher gemäß der Erfindung;
- Figur 2:: eine Ansicht gemäß Figur 1, bei welcher Einlassventil und Auslassventil in ihrer Ventilüberschneidungsphase und das steuerbare Ventil zur Zuführung von Druckluft aus dem Druckluftspeicher in seiner geöffneten Position dargestellt sind;
- Figur 3:: eine Ansicht gemäß Figur 1, bei welcher das erneute Öffnen des Einlassventils zur Zufuhr von Druckluft aus dem Druckluftspeicher bei abgesperrter Einlassleitung gezeigt ist;
- Figur 4:: ein prinzipielles Schema eines mit einem Abgasturbolader aufgeladenen Verbrennungsmotors mit zusätzlichem Druckluftspeicher zur Zuführung von als zusätzliche Verbrennungsluft verwendeter Druckluft in die Einlassleitung der Verbrennungskraftmaschine;
- Figur 5:: einen Bereich der Einlassleitung der Verbrennungskraftmaschine unmittelbar vor dem Einlassventil bei geöffnetem Absperrelement zur Zufuhr von Verbrennungsluft durch die Einlassleitung zum Einlassventil;
- Figur 6:: einen Abschnitt des Zylinderkopfes einer Verbrennungskraftmaschine mit geschlossenem Einlassventil und angedeuteter Zuströmung von Verbrennungsluft vom Aufladesystem der Verbrennungskraftmaschine bzw. Druckluft aus dem Druckluftspeicher; und
- Figur 7:: eine prinzipielle Querschnittsansicht einer Verbrennungskraftmaschine gemäß der Erfindung, bei welcher die gesamte Verbrennungsluft aus einem Druckluftspeicher dem Zylinder bzw. Brennraum zugeführt wird.

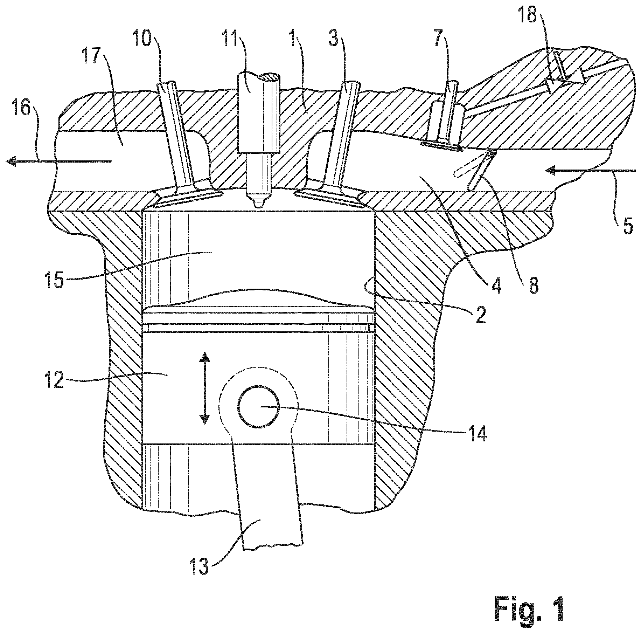

Figur 1 zeigt in prinzipieller Darstellung einen Querschnitt durch einen Zylinder 2 mit Zylinderkopf 1 und angedeutetem Kolben 12 im Zylinder einer Verbrennungskraftmaschine mit einem Einlassventil 3 und einem Auslassventil 10 sowie einer Einspritzdüse 11 im Zylinderkopf 1. Das Einlassventil 3 ist in seiner einen Brennraum 15 des Zylinders 2 zur Einlassleitung 4 abdichtenden Position dargestellt. Ebenso ist das Auslassventil 10 in seiner die Abgasleitung 17 zum Brennraum 15 des Zylinders 2 abdichtenden Position gezeigt. In üblicher Weise bewegt sich der Kolben 12, welcher als Tauchkolben ausgebildet und mit einem Pleuel 13 an einem Kolbenbolzen 14 verbunden ist, zwischen einer unteren und einer oberen Totpunktposition. Diese Bewegung ist durch den im Kolben 12 dargestellten Doppelpfeil angedeutet. In der Einlassleitung 4 ist ein steuerbares Ventil 7 angeordnet, welches über eine Leitung mit einem darin angeordneten Absperrventil 18 mit einem in Figur 1 nicht dargestellten Druckluftspeicher verbunden ist. Das steuerbare Ventil 7 ist in Figur 1 in seiner geschlossenen Position dargestellt.

Der in der Einlassleitung 4 dargestellte Pfeil stellt die von einem Aufladesystem in die Einlassleitung 4 geförderte Verbrennungsluft 5 dar. Infolge der kinetischen Energie der Verbrennungsluft 5 wird ein Absperrelement 8 in Form eines Klappenventils aus der in Figur 1 dargestellten, den Querschnitt der Einlassleitung 4 verschließenden Stellung in die gestrichelt dargestellte sich öffnende Position bewegt. Je nach kinetischer Energie der in die Einlassleitung strömenden Verbrennungsluft 5 kann dieses Klappenventil auch im Wesentlichen, den Querschnitt der Einlassleitung 4 voll freigebend, vollständig geöffnet werden.

In Figur 1 ist der Kolben 12 in seinem Arbeitshub dargestellt, bei welchem das Einlassventil 3 und das Auslassventil 10 geschlossen sind. Während des Arbeitshubes wird der zuvor über die Einspritzdüse 11 eingespritzte Kraftstoff verbrannt, so dass der Kolben 12 seinen Arbeitshub ausführen und sich dabei vom oberen Totpunkt in Richtung auf den unteren Totpunkt bewegen kann.

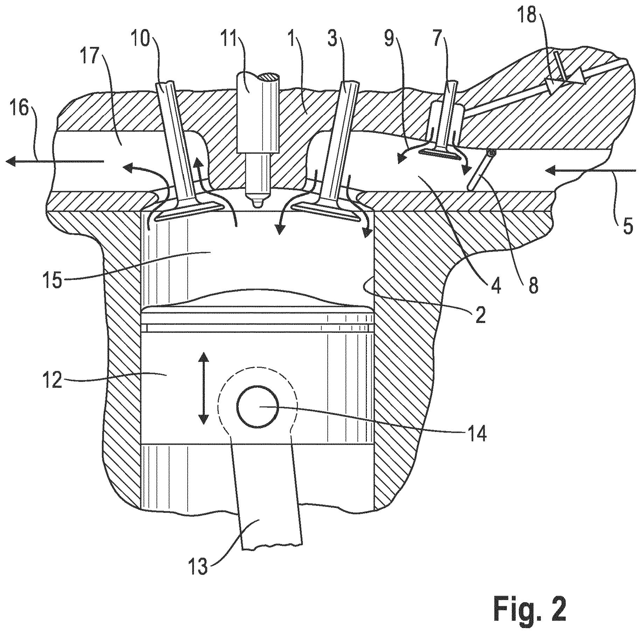

In Figur 2 ist eine prinzipielle Darstellung eines Zylinders 2 mit Zylinderkopf 1 einer Verbrennungskraftmaschine gemäß Figur 1 dargestellt, bei welcher sich der Kolben 12 vom unteren Totpunkt in Richtung auf den oberen Totpunkt ein Stück bewegt hat, wobei der Beginn des Kompressionshubes durch die Ventilüberschneidungsphase gekennzeichnet ist, bei welcher das Einlassventil 3 geöffnet und das Auslassventil 10 noch geöffnet ist. Es strömt daher Verbrennungsluft 5 aus der Einlassleitung 4 in den Brennraum 15 ein, um ein Ausströmen der verbrannten Luft über das geöffnete Auslassventil 10 in die Auslassleitung 17 als Abgas 16 aus dem Brennraum 15 zu unterstützen, um eine möglichst vollständige Beseitigung verbrannter Gase aus dem Brennraum 15 realisieren zu können.

Für gleiche Bauelemente und Teile sind gleiche Bezugsziffern verwendet, so dass deren Bedeutung nicht in jedem Fall hier wiederholt wird. Bei geöffnetem Absperrventil 18 wird Druckluft 9 aus dem nicht dargestellten Druckluftspeicher über das Ventil 7 in den Bereich der Einlassleitung 4 unmittelbar vor dem Einlassventil 3 zugeführt. Der Druck im Druckluftspeicher ist in der Regel deutlich höher als der vom Ladeorgan in der Einlassleitung 4 erzeugte Druck der Verbrennungsluft 5. Wenn daher die Druckluft 9 über das Ventil 7 in den Bereich der Einlassleitung 4 unmittelbar vor dem Einlassventil 3 zugeführt wird, schließt sich das Absperrelement 8, und zwar auch gegen die Wirkung der kinetischen Energie der strömenden Verbrennungsluft 5. Mit dieser zusätzlichen Druckluft 9 wird also ein nicht unerheblicher Nachladeeffekt des Zylinders bzw. Brennraumes 15 erreicht. Die Steuerung des Einlassventils 3, des Ventils 7 und des Auslassventils 10 sind dabei so aufeinander abgestimmt, dass dieser Nachladeeffekt auftritt, ohne dass die zusätzlich unter erhöhtem Druck in die Einlassleitung 4 und über das Einlassventil 3 in den Brennraum 15 zugeführte Druckluft über das Auslassventil 10 entweichen kann. Das Auslassventil 10 wird also zur verstärkten Beladung des Zylinders 2 mit Frischluft rechtzeitig geschlossen, und zwar bevor das Einlassventil 3 wieder schließt.

Der Vorteil einer derartigen Anordnung besteht auch darin, dass beispielsweise bei Ausfall des Ladeorgans das vorzugsweise aktiv betätigte Absperrelement 8 in seiner geschlossenen Position dafür sorgt, dass das mit der Druckluft aus dem Druckluftspeicher aufzufüllende Volumen dieses nahe dem Einlassventil 3 befindlichen Teils der Einlassleitung 4 zur alleinigen Befüllung des Zylinders mit Verbrennungsluft als Druckluft 9 aus dem Druckluftspeicher relativ klein gehalten werden kann.

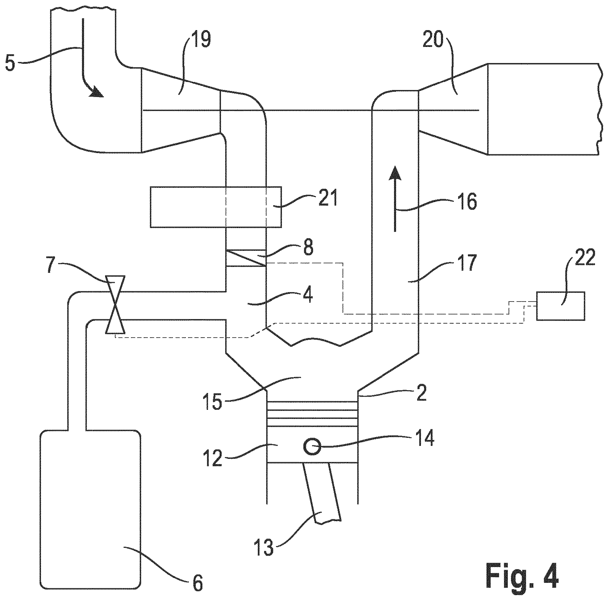

Besonders vorteilhaft ist diese Ausgestaltung gemäß der Erfindung auch dann, wenn bei funktionierendem Lader trotzdem für einen gewünschten Nachladeeffekt zusätzlich Druckluft 9 aus dem Druckluftspeicher 6 (siehe Figur 4) über das Ventil 7 zusätzlich in die Einlassleitung 4 und damit in den Zylinder 2, d.h. den Brennraum 15, zugeführt wird. Die Steuerung des Ventils 7 kann dabei in Abhängigkeit von den jeweiligen Lastverhältnissen der Verbrennungskraftmaschine vorgenommen werden.

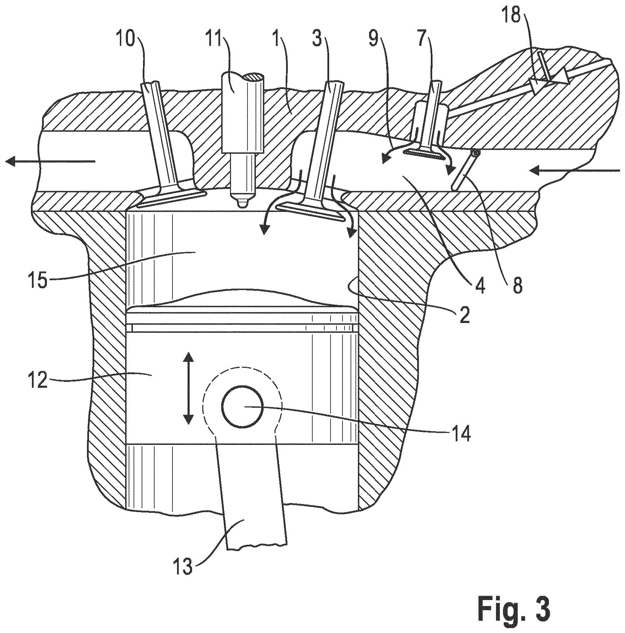

In Figur 3 ist nun eine Darstellung ebenfalls gemäß Figur 1 einer Verbrennungskraftmaschine, d.h. von deren Zylinder 2 und Zylinderkopf 1 gezeigt, bei welcher die Phase der beginnenden Kompression, d.h. Aufwärtsbewegung des Kolbens 12 vom unteren Totpunkt in Richtung auf den oberen Totpunkt, soweit eingesetzt hat und realisiert worden ist, dass das Auslassventil 10 bereits geschlossen ist und der Druck im Brennraum 15 noch unter dem Druck liegt, welcher in dem Druckluftspeicher 6 vorhanden ist. In diesem Zustand ist das Einlassventil 3, nachdem es bereits zur normalen Befüllung des Brennraumes 15 mit Frischluft über die vom Lader kommende Verbrennungsluft 5 befüllt worden ist, kurzzeitig erneut geöffnet wird, wobei diese kurzzeitige Öffnungsposition in Figur 3 dargestellt ist, so dass bei gleichzeitig geöffnetem Ventil 7 und geschlossenem Absperrelement 8 zusätzlich Druckluft 9 im Sinne eines Nachladeeffektes von dem Druckluftspeicher 6 in den Zylinder 2 eingebracht werden kann. Die zusätzliche Druckluft 9 gewährleistet einen höheren für die Verbrennung vorhandenen Anteil an Sauerstoff, so dass bei entsprechend angepasster Einspritzmenge das Drehmoment und damit die Leistung der Verbrennungskraftmaschine erhöht werden können.

In Figur 4 ist in prinzipieller Darstellung die Anordnung eines Verbrennungsmotors mit Abgasturbolader 19, 20 und Ladeluftkühler 21 sowie zusätzlich vorhandenem Druckluftspeicher 6 zur Nachladung des Zylinders 2 der Verbrennungskraftmaschine gemäß der Erfindung gezeigt. Dabei wird durch einen Verdichter 19 des aus diesem Verdichter 19 und einer Abgasturbine 20 bestehenden Abgasturboladers Frischluft als Verbrennungsluft 5 angesaugt, im Verdichter 19 verdichtet und durch einen in der Einlassleitung 4 angeordneten Ladeluftkühler 21 zur Erhöhung der Dichte der Verbrennungsluft 5 zurückgekühlt. Die Verbrennungsluft 5 strömt dann an dem Absperrelement 8 weiter in Richtung auf das nicht dargestellte Einlassventil in den Brennraum 15 des Zylinders 2 ein, welcher nach unten durch den Kolben 12 begrenzt wird, welcher über ein an einem Kolbenbolzen 14 angelenktes Pleuel 13 mit einer nicht dargestellten Kurbelwelle verbunden ist. Zusätzlich ist der Druckluftspeicher 6 dargestellt, welcher über eine Zwischenleitung über ein Absperrventil 18 an die Einlassleitung 4 angeschlossen ist. Eine Steuereinrichtung 22 steuert das steuerbare Ventil 7 und das Absperrelement 8 derart, dass entweder zusätzliche Druckluft 9 aus dem Druckluftspeicher 6 in die Einlassleitung 4 und damit in den Zylinder in den Brennraum 15 im Sinne eines Nachladeeffektes zugeführt werden kann, so dass das Drehmoment der Verbrennungskraftmaschine bei entsprechend erhöhter Einspritzmenge erhöht werden kann, oder die gesamte Verbrennungsluft aus dem Druckluftspeicher 6 dem Zylinder 2 zugeführt wird, wenn das Absperrelement 8 den Querschnitt der Einlassleitung 4 verschließt. Letzteres kann vor allen Dingen dann angewendet werden, wenn beispielsweise der Abgasturbolader 19, 20 außer Betrieb ist, was havariebedingt durchaus bei Ausfall beispielsweise des Verdichters 19 der Fall sein kann. In einem solchen Fall kann dennoch die Abgasturbine arbeiten und ihre, gemäß der Erfindung, verwendet Energie über einen nicht darstellten zusätzlichen Verdichter für die Speisung des Druckluftspeichers 6. Die Steuereinrichtung 22 steuert also das steuerbare Ventil 7 und das Absperrelement 8 in Abhängigkeit voneinander und in Abhängigkeit von der geforderten oder gewünschten Leistung der Verbrennungskraftmaschine.

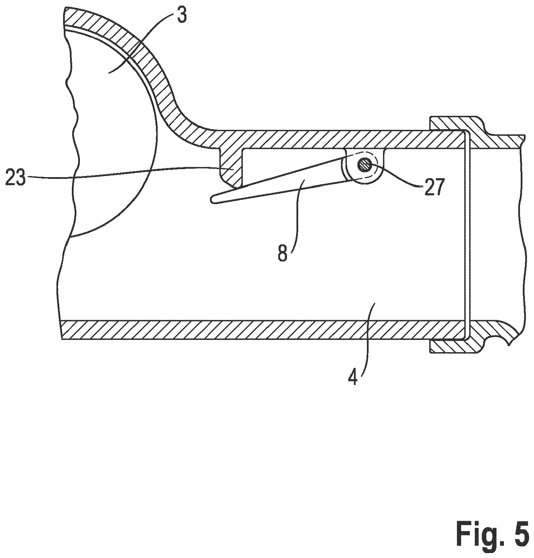

In prinzipieller Ansicht ist in Figur 5 der Bereich der Einlassleitung 4 gezeigt, welcher unmittelbar neben dem Einlassventil 3 angeordnet ist, von welchem der Ventilteller gezeigt ist. Unmittelbar vor dem Einlassventil 3 ist ein Absperrelement 8 angeordnet, welches in der in Figur 5 gezeigten Darstellung in seiner den Querschnitt der Einlassleitung 4 freigebenden geöffneten Position angeordnet ist. In dieser Position kann Verbrennungsluft, welche beispielsweise von einem Lader gefördert wird, über die Einlassleitung 4 und das Einlassventil 3 in den Zylinder zur Füllung des Brennraumes mit Frischluft gefördert werden. Das Absperrelement 8 kann beispielsweise so ausgebildet sein, dass die kinetische Energie der zuströmenden Verbrennungsluft das als Klappenventil ausgebildete Absperrelement 8 auslenkt und somit den Strömungsquerschnitt für die Verbrennungsluft in Richtung auf den Zylinder freigibt.

Gemäß der Erfindung wird im Bereich des Einlassventils 3 zusätzlich über ein steuerbares Ventil 7 Druckluft 9 aus einem Druckluftspeicher 6 zugeführt. Dieses steuerbare Ventil 7 ist der Einfachheit halber in Figur 5 nicht gezeigt. Der Druck in dem Druckluftspeicher 6 ist in jedem Fall höher als der durch den Lader in der Einlassleitung 4 erzeugte Druck der Verbrennungsluft. Dadurch wird bei geöffnetem steuerbaren Ventil 7 das Absperrelement 8 auch entgegen der kinetischen Energie der strömenden Verbrennungsluft 5 in seine Schließstellung geschwenkt, in welcher der Öffnungsquerschnitt der Einlassleitung 4 im Wesentlichen komplett geschlossen wird. Es ist jedoch auch möglich, dass das Absperrelement 8 aktiv mittels eines Aktuators 27 betätigt werden kann. Wenn der Aktuator 27 das Absperrelement 8 in seine Schließposition gebracht hat oder wenn der erhöhte Druck der Druckluft 9 aus dem Druckluftspeicher 6 ein Verschwenken des Absperrelementes 8 in seine Schließposition bewirkt hat, kann entweder der Zylinder 2 komplett mit Druckluft 9 aus dem Druckluftspeicher 6 befüllt werden, oder es kann eine zusätzliche Speisung von Druckluft 9 in den Zylinder 2 bei erneut geöffnetem Einlassventil 3 für einen Nachladeeffekt während der Kompressionsphase des Kolbens 12 realisiert werden.

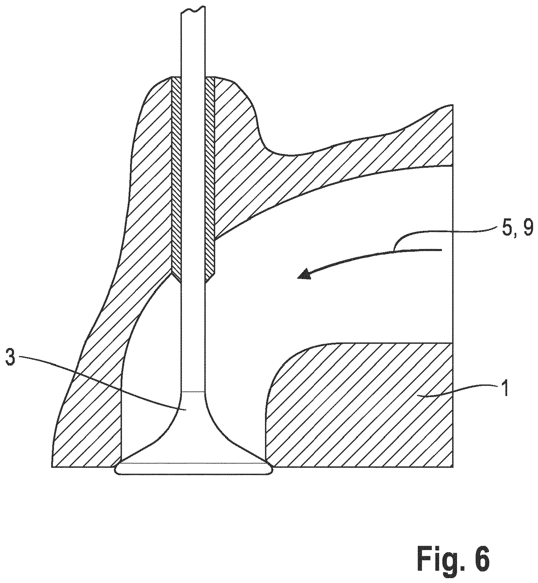

Figur 6 zeigt ein Einlassventil 3 im Zylinderkopf 1 mit der von einer Einlassleitung 4 kommenden Verbrennungsluft 5 bzw. aus einem Druckluftspeicher 6 (nicht dargestellt) kommenden Druckluft 9. In Figur 6 ist lediglich der Krümmer des letzten Teils der Einlassleitung 4, d.h. des Bereiches, welcher unmittelbar zum Einlassventil 3 führt, dargestellt. Gemäß der Erfindung kann an diesen Einlasskrümmer im Zylinderkopf 1 auch unmittelbar ein Druckluftbehälter 6 angeschlossen sein, welcher die gesamte Verbrennungsluft für den Verbrennungsvorgang im Zylinder 2 einer Verbrennungskraftmaschine zur Verfügung stellt.

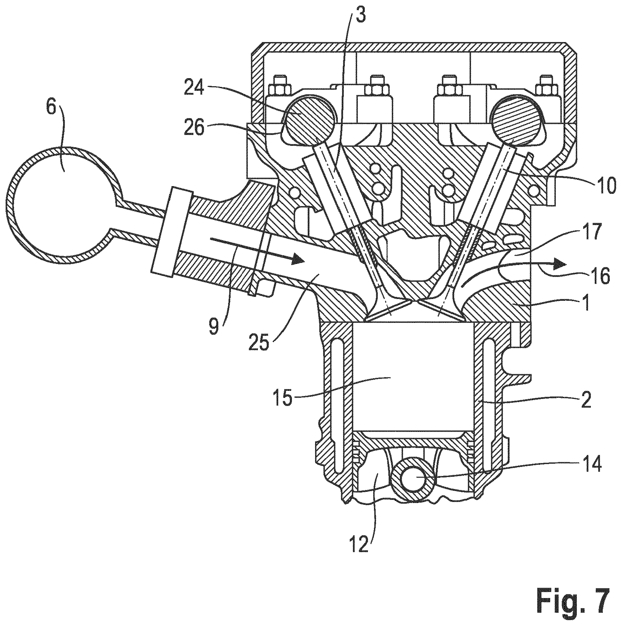

In Figur 7 ist ein derartiges Ausführungsbeispiel in prinzipieller Schnittdarstellung für eine erfindungsgemäße Verbrennungskraftmaschine gezeigt. In üblicher Weise ist der den Brennraum 15 nach unten abdichtende Kolben 12 mit seinem Kolbenbolzen 14 gezeigt, wobei im Zylinderkopf, welcher den Brennraum 15 nach oben abschließt, sowohl das Einlassventil 3 als auch das Auslassventil 10 in jeweils geschlossener Stellung dargestellt sind. Über die Abgasleitung 17 kann bei geöffnetem Auslassventil 10 nach Beendigung des Arbeitshubes verbranntes Abgas den Zylinder 2 verlassen. Dies ist durch den Pfeil 16 dargestellt. Unmittelbar an den Bereich des Einlassventils 3 ist ein Druckluftspeicher 6 gezeichnet, welcher ein Einlassreservoir 25 unmittelbar vor dem Einlassventil 3 mit Druckluft 9 versorgt. Bei geöffnetem Einlassventil 3 kann daher Druckluft 9 in den Zylinder 2 der Verbrennungskraftmaschine eingeführt werden. Dies kann während des gesamten Ladungswechsels wie auch während einer Nachladephase bei erneut geöffnetem Einlassventil 3 während des Kompressionshubes realisiert werden. Das Einlassventil 3 wird über einen Nocken 24, welcher auf einer nicht gezeigten Nockenwelle sitzt, gesteuert. Dieser Nocken weist zusätzlich eine Öffnungsrampe auf, mit der ein erneutes Öffnen während der Kompressionsphase realisiert wird. Prinzipiell ist es jedoch auch möglich, für das erneute Öffnen einen separaten Nocken auf der Nockenwelle vorzusehen, was in Figur 7 jedoch nicht gezeigt ist.

### Bezugszeichenliste

- 1: Zylinderkopf
- 2: Zylinder
- 3: Einlassventil
- 4: Einlassleitung
- 5: Verbrennungsluft
- 6: Druckluftspeicher
- 7: Ventil
- 8: Absperrelement/Klappenventil
- 9: Druckluft
- 10: Auslassventil
- 11: Einspritzdüse
- 12: Kolben
- 13: Pleuel
- 14: Kolbenbolzen
- 15: Brennraum
- 16: Abgas
- 17: Abgasleitung
- 18: Absperrventil
- 19: Verdichter
- 20: Turbine
- 19, 20: Abgasturbolader
- 21: Ladeluftkühler
- 22: Steuereinrichtung
- 23: Anschlag Absperrelement
- 24: Nocken Einlassventil
- 25: Einlassreservoir
- 26: Öffnungsrampe
- 27: Aktuator Absperrelement

## Patentansprüche

1. Verbrennungskraftmaschine in Hubkolbenbauart mit nur einem in einem Zylinderkopf (1) eines Zylinders (2) angeordneten Einlassventil (3), an welches eine Einlassleitung (4) angeschlossen ist, über welche Verbrennungsluft (5) dem Zylinder (2) zuführbar ist, mit einem Druckluftspeicher (6), aus dem über ein steuerbares Ventil (7) Druckluft in den Zylinder (2) der Verbrennungskraftmaschine einleitbar ist,
wobei
die Verbrennungskraftmaschine ein Absperrelement (8) in der Einlassleitung (4) zum Sperren des Durchströmquerschnitts der Einlassleitung (4) aufweist, **dadurch gekennzeichnet, dass** das Ventil (7) und das Absperrelement (8) in Abhängigkeit voneinander und von der geforderten Leistung der Verbrennungskraftmaschine derart steuerbar sind, dass auf Basis eines Steuersignals entweder zusätzliche Druckluft (9) aus dem Druckluftspeicher (6) in einen Bereich der Einlassleitung (4), in welchem das Einlassventil (3) angeordnet ist und welcher bei in seiner geschlossenen Position befindlichem Absperrelement (8) im Wesentlichen auf den Zylinderkopf (1) beschränkt ist, zuführbar ist, und bei erhöhter Einspritzmenge das Drehmoment erhöhbar ist,
wobei
das Einlassventil (3) mittels eines seine Bewegung definierenden Ansteuerelementes während des Kompressionshubes kurzzeitig erneut in eine Offenstellung bringbar ist, während welcher die Druckluft (9) aus dem Druckluftspeicher (6) über das gesteuerte Ventil (7) in den Zylinder (2) einleitbar und das Absperrelement (8) in seiner geschlossenen Position ist, oder bei Ausfall eines Verdichters eines den Verdichter und eine Abgasturbine aufweisenden Abgasturboladers die gesamte Verbrennungsluft aus dem Druckluftspeicher (6) dem Zylinder (2) zuführbar ist und die Abgasturbine dann einen zusätzlichen Verdichter zur Speisung des Druckluftspeichers (6) antreibt.

2. Verbrennungskraftmaschine nach Anspruch 1, **dadurch gekennzeichnet, dass** das Absperrelement (8) ein druckluftgesteuertes, zwischen zwei Positionen bewegbares Klappenventil ist, wobei das Absperrelement (8) bei geöffnetem steuerbaren Ventil (7) durch kinetische Energie der Druckluft (9) aus dem Druckluftspeicher (6) mit ihrem gegenüber der Einlassleitung (4) höheren Druck in eine die Einlassleitung (4) sperrende Position bewegbar ist und dort hält und bei geschlossenen gesteuertem Ventil (7) durch die in der Einlassleitung (4) vorhandene kinetische Energie der Verbrennungsluft (5) das Klappenventil in eine die Einlassleitung (4) freigebende geöffnete Position bewegbar ist.

3. Verbrennungskraftmaschine nach Anspruch 2, **dadurch gekennzeichnet, dass** das Klappenventil mit einem steuerbaren Aktuator (27) aus seiner geöffneten Position in seine sperrende Position und umgekehrt bewegbar, insbesondere schwenkbar, ist.

4. Verbrennungskraftmaschine nach Anspruch 3, **dadurch gekennzeichnet, dass** der Aktuator (27) elektrisch, magnetisch oder als Kombination zumindest zweier dieser Antriebsarten antreibbar ist.

5. Verbrennungskraftmaschine nach einem der Ansprüche 1 bis 4, **dadurch gekennzeichnet, dass** das Einlassventil (3) so steuerbar ist, dass es erst nach Bewegen des Absperrelementes (8) in dessen geschlossene Position öffnet und vor dem Bewegen des Absperrelementes (8) in dessen geöffnete Position schließt.

6. Verbrennungskraftmaschine nach einem der Ansprüche 1 bis 5, **dadurch gekennzeichnet, dass** am das Einlassventil (3) steuernden Ansteuerelement in Form eines Nockens (24) einer Nockenwelle eine zusätzliche Öffnungsrampe (26) zum erneuten Öffnen des Einlassventils (3) vorgesehen ist.

7. Verbrennungskraftmaschine nach einem der Ansprüche 1 bis 5, **dadurch gekennzeichnet, dass** ein separater Nocken auf der Nockenwelle zum erneuten Öffnen des Einlassventils (3) vorgesehen ist.

8. Verbrennungskraftmaschine nach einem der Ansprüche 1 bis 7, **dadurch gekennzeichnet, dass** das Absperrelement (8) am Eintrittsbereich der Einlassleitung (4) in den Zylinderkopf (1) angeordnet ist.

9. Verbrennungskraftmaschine nach einem der Ansprüche 1 bis 8, **dadurch gekennzeichnet, dass** im Druckluftspeicher (6) ein Druck von 10 bis 15 bar herrscht.

10. Verbrennungskraftmaschine nach einem der Ansprüche 1 bis 9, **dadurch gekennzeichnet, dass** das die Zufuhr von Druckluft (9) in die Einlassleitung steuernde Ventil (7) zwischen dem Absperrelement (8) und dem Einlassventil (3) angeordnet ist.

11. Verbrennungskraftmaschine nach einem der Ansprüche 1 bis 10, **dadurch gekennzeichnet, dass** mittels des steuerbaren Ventils (7) motorbetriebsparameterabhängig Druckluft (9) in die Einlassleitung (4) zuführbar ist.

## Claims

1. Internal combustion engine of a reciprocating piston design with only one inlet valve (3) which is arranged in a cylinder head (1) of a cylinder (2) and to which an inlet line (4) is connected, via which combustion air (5) can be fed to the cylinder (2), with a compressed air store (6), from which compressed air can be introduced via a controllable valve (7) into the cylinder (2) of the internal combustion engine, the internal combustion engine having a shut-off element (8) in the inlet line (4) for shutting off the through flow cross section of the inlet line (4), **characterized in that** the valve (7) and the shut-off element (8) can be controlled in a manner which is dependent on one another and on the required power output of the internal combustion engine, in such a way that, on the basis of a control signal, either additional compressed air (9) can be fed from the compressed air store (6) into a region of the inlet line (4), in which region the inlet valve (3) is arranged, and which region is restricted substantially to the cylinder head (1) in the case of the shut-off element (8) being situated in its closed position, and the torque can be increased in the case of an increased injection quantity, it being possible for the inlet valve (3) to be moved briefly again into an open position during the compression stroke by means of an actuating element which defines its movement, during which the compressed air (9) can be introduced from the compressed air store (6) via the control valve (7) into the cylinder (2), and the shut-off element (8) is in its closed position, or, in the case of a failure of a compressor of an exhaust gas turbocharger which has the compressor and an exhaust gas turbine, the entire combustion air can be fed from the compressed air store (6) to the cylinder (2), and the exhaust gas turbine then drives an additional compressor for feeding the compressed air store (6).

2. Internal combustion engine according to Claim 1, **characterized in that** the shut-off element (8) is a flap valve which is controlled by compressed air and can be moved between two positions, it being possible, in the case of an open controllable valve (7), for the shut-off element (8) to be moved by way of kinetic energy of the compressed air (9) out of the compressed air store (6) with its higher pressure in comparison with the inlet line (4) into a position which shuts off the inlet line (4), and the said shut-off valve (8) remaining there, and, in the case of a closed control valve (7), it being possible for the flap valve to be moved into an open position which releases in the inlet line (4) the kinetic energy of the combustion air (5), which kinetic energy is present in the inlet line (4).

3. Internal combustion engine according to Claim 2, **characterized in that** the flap valve can be moved, in particular can be pivoted, by way of a controllable actuator (27) out of its open position into its shutting-off position and vice versa.

4. Internal combustion engine according to Claim 3, **characterized in that** the actuator (27) can be driven electrically, magnetically or as a combination of at least two of the said drive types.

5. Internal combustion engine according to one of Claims 1 to 4, **characterized in that** the inlet valve (3) can be controlled in such a way that it opens only after the shut-off element (8) is moved into its closed position, and closes before the movement of the shut-off element (8) into its open position.

6. Internal combustion engine according to one of Claims 1 to 5, **characterized in that** an additional opening ramp (26) for renewed opening of the inlet valve (3) is provided on the actuating element which controls the inlet valve (3) in the form of a cam (24) of a camshaft.

7. Internal combustion engine according to one of Claims 1 to 5, **characterized in that** a separate cam is provided on the camshaft for renewed opening of the inlet valve (3).

8. Internal combustion engine according to one of Claims 1 to 7, **characterized in that** the shut-off element (8) is arranged at the entry region of the inlet line (4) into the cylinder head (1).

9. Internal combustion engine according to one of Claims 1 to 8, **characterized in that** a pressure of from 10 to 15 bar prevails in the compressed air store (6).

10. Internal combustion engine according to one of Claims 1 to 9, **characterized in that** the valve (7) which controls the feed of compressed air (9) into the inlet line is arranged between the shut-off element (8) and the inlet valve (3).

11. Internal combustion engine according to one of Claims 1 to 10, **characterized in that** compressed air (9) can be fed into the inlet line (4) by means of the controllable valve (7) in a manner which is dependent on engine operating parameters.

## Revendications

1. Moteur à combustion interne de conception à pistons alternatifs, qui comprend uniquement une soupape d'admission (3) agencée dans une tête de cylindre (1) d'un cylindre (2), à laquelle est raccordée une conduite d'admission (4), par laquelle de l'air de combustion (5) peut être introduit dans le cylindre (2), comprenant un accumulateur d'air comprimé (6), à partir duquel de l'air comprimé peut être acheminé dans le cylindre (2) du moteur à combustion interne par l'intermédiaire d'une soupape commandable (7),
le moteur à combustion interne comprenant un élément de blocage (8) dans la conduite d'admission (4) pour le blocage de la section transversale d'écoulement de la conduite d'admission (4),
**caractérisé en ce que**
la soupape (7) et l'élément de blocage (8) sont commandables en fonction l'un de l'autre et de la puissance requise du moteur à combustion interne de telle sorte que, sur la base d'un signal de commande, soit de l'air comprimé supplémentaire (9) provenant de l'accumulateur d'air comprimé (6) puisse être introduit dans une zone de la conduite d'admission (4), dans laquelle la soupape d'admission (3) est agencée et qui est essentiellement restreinte à la tête de cylindre (1) lorsque l'élément de blocage (8) se trouve dans sa position fermée, et que le moment de rotation puisse être augmenté lorsque la quantité injectée est élevée,
la soupape d'admission (3) pouvant de nouveau brièvement être amenée dans une position d'ouverture par l'intermédiaire d'un élément de commande définissant son mouvement pendant la course de compression, pendant quoi l'air comprimé (9) provenant de l'accumulateur d'air comprimé (6) peut être acheminé dans le cylindre (2) par l'intermédiaire de la soupape commandée (7) et l'élément de blocage (8) est dans sa position fermée, soit, en cas de défaillance d'un compresseur d'un turbocompresseur de gaz d'échappement comprenant le compresseur et une turbine de gaz d'échappement, la totalité de l'air de combustion provenant de l'accumulateur d'air comprimé (6) puisse être introduit dans le cylindre (2) et la turbine de gaz d'échappement entraîne alors un compresseur supplémentaire pour l'alimentation de l'accumulateur d'air comprimé (6).

2. Moteur à combustion interne selon la revendication 1, **caractérisé en ce que** l'élément de blocage (8) est une soupape à clapet commandée par de l'air comprimé, pouvant être déplacée entre deux positions, l'élément de blocage (8) pouvant être déplacé dans une position bloquant la conduite d'admission (4) lorsque la soupape commandable (7) est ouverte par une énergie cinétique de l'air comprimé (9) provenant de l'accumulateur d'air comprimé (6) avec sa pression plus élevée par rapport à la conduite d'admission (4) et y être maintenu et, lorsque la soupape commandée (7) est fermée, la soupape à clapet pouvant être déplacée dans une position ouverte dégageant à la conduite d'admission (4) l'énergie cinétique de l'air de combustion (5) présente dans la conduite d'admission (4).

3. Moteur à combustion interne selon la revendication 2, **caractérisé en ce que** la soupape à clapet peut être déplacée, notamment pivotée, avec un actionneur commandable (27) depuis sa position ouverte dans sa position de blocage et inversement.

4. Moteur à combustion interne selon la revendication 3, **caractérisé en ce que** l'actionneur (27) est entraînable électriquement, magnétiquement ou sous la forme d'une combinaison d'au moins deux de ces types d'entraînements.

5. Moteur à combustion interne selon l'une quelconque des revendications 1 à 4, **caractérisé en ce que** la soupape d'admission (3) est commandable de telle sorte qu'elle n'ouvre qu'après un mouvement de l'élément de blocage (8) dans sa position fermée et qu'elle ferme avant le mouvement de l'élément de blocage (8) dans sa position ouverte.

6. Moteur à combustion interne selon l'une quelconque des revendications 1 à 5, **caractérisé en ce qu'**une rampe d'ouverture supplémentaire (26) pour une nouvelle ouverture de la soupape d'admission (3) est prévue sous la forme d'une came (24) d'un arbre à cames sur l'élément de commande commandant la soupape d'admission (3).

7. Moteur à combustion interne selon l'une quelconque des revendications 1 à 5, **caractérisé en ce qu'**une came séparée est prévue sur l'arbre à cames pour une nouvelle ouverture de la soupape d'admission (3).

8. Moteur à combustion interne selon l'une quelconque des revendications 1 à 7, **caractérisé en ce que** l'élément de blocage (8) est agencé au niveau de la zone d'entrée de la soupape d'admission (4) dans la tête de cylindre (1).

9. Moteur à combustion interne selon l'une quelconque des revendications 1 à 8, **caractérisé en ce qu'**une pression de 10 à 15 bar règne dans l'accumulateur d'air comprimé (6).

10. Moteur à combustion interne selon l'une quelconque des revendications 1 à 9, **caractérisé en ce que** la soupape (7) commandant l'introduction d'air comprimé (9) dans la conduite d'admission est agencée entre l'élément de blocage (8) et la soupape d'admission (3).

11. Moteur à combustion interne selon l'une quelconque des revendications 1 à 10, **caractérisé en ce que** de l'air comprimé (9) peut être introduit dans la conduite d'admission (4) par l'intermédiaire de la soupape commandable (7) en fonction de paramètres d'exploitation du moteur.
